Europäisches Patentamt

**European Patent Office**

Office européen des brevets

(19)

(11) **EP 1 364 299 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*G06F 15/78* (2006.01)     *G06F 9/46* (2006.01)
*G06F 13/40* (2006.01)

(21) Anmeldenummer: **02719931.4**

(22) Anmeldetag: **26.02.2002**

(86) Internationale Anmeldenummer:
**PCT/EP2002/002045**

(87) Internationale Veröffentlichungsnummer:
**WO 2002/071247 (12.09.2002 Gazette 2002/37)**

(54) **VERFAHREN UND SYSTEM ZUR DIGITALEN ECHTZEIT-DATENVERARBEITUNG**

METHOD AND SYSTEM FOR CONDUCTING DIGITAL REAL-TIME DATA PROCESSING

PROCEDE ET SYSTEME DE TRAITEMENT DE DONNEES NUMERIQUES TEMPS REEL

(84) Benannte Vertragsstaaten:
**FR GB IT**

(30) Priorität: **01.03.2001 DE 10109974**

(43) Veröffentlichungstag der Anmeldung:
**26.11.2003 Patentblatt 2003/48**

(73) Patentinhaber: **Infineon Technologies AG
81669 München (DE)**

(72) Erfinder:
• **FRENZEL, Rudi
81735 München (DE)**
• **GLATT, Wolfgang
81735 München (DE)**
• **JAIN, Raj, Kumar
448908 Singapore (SG)**

• **TERSCHLUSE, Markus
81673 München (DE)**
• **UHLEMANN, Stefan
81541 München (DE)**

(74) Vertreter: **Reinhard - Skuhra - Weise & Partner
Postfach 44 01 51
80750 München (DE)**

(56) Entgegenhaltungen:
**US-A- 5 743 859          US-A- 5 969 654**

• **PATENT ABSTRACTS OF JAPAN vol. 1998, no. 06, 30. April 1998 (1998-04-30) & JP 10 042592 A (SHIMADZU CORP), 13. Februar 1998 (1998-02-13)**

**Beschreibung**

Die Erfindung betrifft ein Verfahren und ein System zur digitalen Echtzeit-Datenverarbeitung von mehreren digitalen Eingangsdatenströmen, die unterschiedliche Datenübertragungsraten aufweisen.

In vielen digitalen Datenverarbeitungssystemen der Meß- und Kommunikationstechnik wird eine einzige elektronische Datenverarbeitungseinheit zur Datenverarbeitung von mehreren digitalen Eingangsdatenströmen in einem Zeitmultiplexverfahren eingesetzt. Die Datenverarbeitungseinheit fängt die unterschiedlichen digitalen Eingangsdatenströme von beliebigen digitalen Datenquellen, wie beispielsweise analogen Sensoren mit nachgeschalteten Analog-/Digitalwandlern, führt die Datenverarbeitung durch und gibt die verarbeiteten Daten als digitale Ausgangsdatenströme an Datensenken ab.

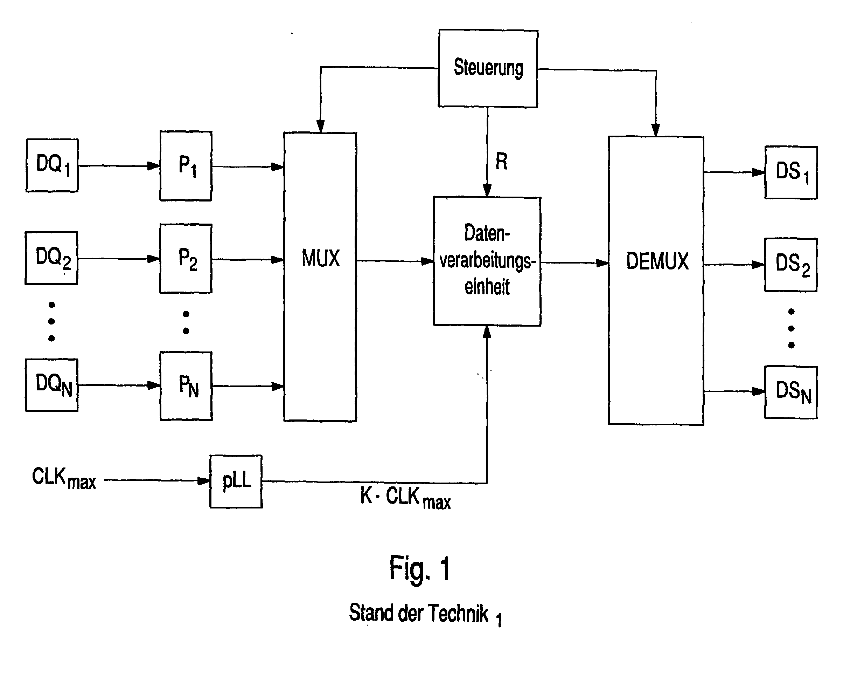

Fig. 1 zeigt ein erstes digitales Echtzeit-Datenverarbeitungssystem nach dem Stand der Technik. Mehrere Datenquellen DQ geben digitale Eingangsdatenströme ab, die in zugehörigen Eingangspufferspeichern des digitalen Echtzeit-Datenverarbeitungssystems zwischengespeichert werden. Die zwischengespeicherten Daten gelangen von einem Puffer zu einem Eingang eines Multiplexers, der durch eine Steuerung angesteuert wird. Ausgangsseitig ist der Multiplexer mit einer getakteten Datenverarbeitungseinheit verbunden. Die zwischengespeicherten Daten der verschiedenen Datenquellen werden zyklisch an den Eingang der Datenverarbeitungseinheit geschaltet, die die digitale Datenverarbeitung durchführt. Die Daten der verschiedenen Datenquellen DQ werden der Datenverarbeitungseinheit dabei blockweise zugeführt, durch die Datenverarbeitungseinheit digital verarbeitet und blockweise über einen Demultiplexer an verschiedene Datensenken DS abgegeben. Die Eingangspufferspeicher P werden benötigt, wenn die digitalen Datenquellen DQ einen kontinuierlichen digitalen Datenstrom liefern. Die Pufferspeicher P speichern dabei die Daten der einzelnen Datenquellen über denjenigen Zeitraum zwischen, der zur Datenverarbeitung der Daten der übrigen Datenquellen durch die Datenverarbeitungseinheit benötigt wird.

Die Datenverarbeitungseinheit wird über einen Takteingang durch ein Taktsignal getaktet. Bei dem in Fig. 1 dargestellten Echtzeit-Datenverarbeitungssystem nach dem Stand der Technik weisen die Datenströme der digitalen Datenquellen DQ gleiche Datenübertragungsraten auf. In diesem Falle wird die Datenverarbeitungseinheit mit einem Taktsignal getaktet, dessen Taktfrequenz einem Vielfachen der maximalen Datenübertragungsrate entspricht.

Bei dem in Fig. 1 dargestellten digitalen Echtzeit-Datenverarbeitungssystem nach dem Stand der Technik wird die Datenverarbeitungseinheit periodisch für immer dieselbe Zeitspanne mit jedem der Eingänge des Multiplexers bzw. mit jedem der Ausgänge des Demultiplexers verbunden. Die in Fig. 1 dargestellte Steuerung kann bei diesem herkömmlichen digitalen Echtzeit-Datenverarbeitungssystem als einfacher Zähler ausgebildet sein. Die Datenverarbeitungseinheit führt eine kontinuierliche Datenverarbeitung durch und wird mit jedem Umschalten des Multiplexers auf einen bestimmten Ausgangszustand über eine Rücksetzleitung R zurückgesetzt. Bei der Datenverarbeitungseinheit handelt es sich beispielsweise um einen programmierbaren digitalen Signalprozessor für ein mehrkanaliges digitales Audiosystem. Das in Fig. 1 dargestellte, herkömmliche digitale Echtzeit-Datenverarbeitungssystem kann allerdings nur bei Eingangsdatenströmen eingesetzt werden, die alle die gleiche Datenübertragungsrate aufweisen.

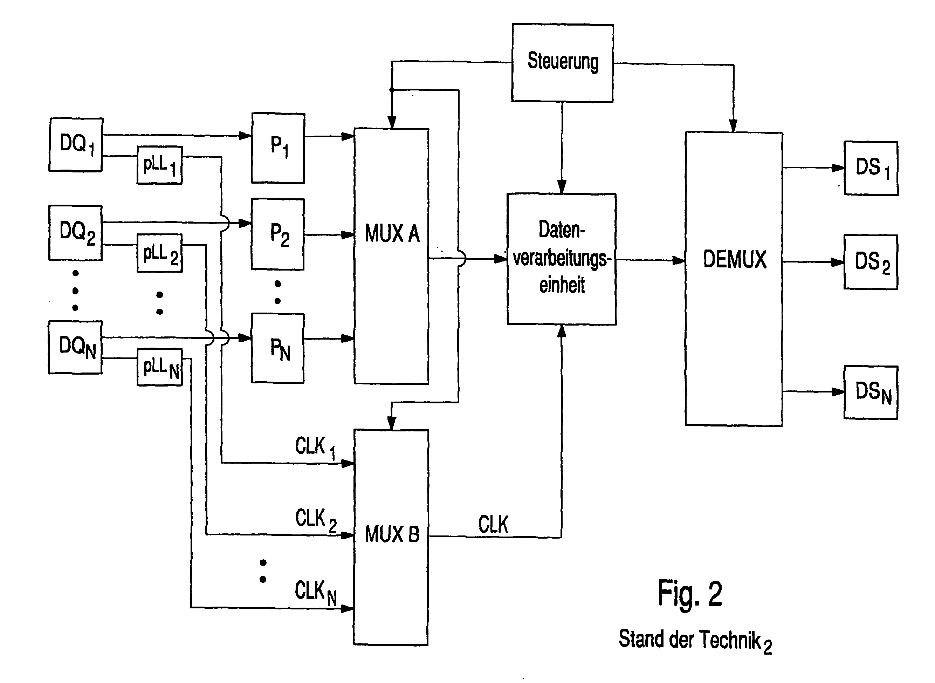

Fig. 2 zeigt ein weiteres digitales Echtzeit-Datenverarbeitungssystem nach dem Stand der Technik, bei dem die digitalen Datenquellen DQ unterschiedliche Datenübertragungsraten aufweisen. Die digitalen Datenquellen DQ besitzen Datenübertragungsraten, die untereinander unabhängig sind, und liefern ein Referenzsignal, das die jeweilige Datenübertragungsrate angibt, beispielsweise ein Taktsignal. Die Taktfrequenz der verschiedenen Taktsignale wird durch eine Frequenz-Vervielfachungsschaltung, beispielsweise eine PLL-Schaltung, an die Datenverarbeitungsgeschwindigkeit der Datenverarbeitungseinheit angepaßt und an einen zugehörigen Eingang eines weiteren Multiplexers MUXB gegeben. Die Steuerung schaltet über einen Multiplexer MUXA zyklisch einen digitalen Eingangsdatenstrom und gleichzeitig über einen zweiten Multiplexer MUXB das zugehörige angepaßte Taktsignal an die Datenverarbeitungseinheit durch. Die Datenverarbeitungseinheit führt dann die Datenverarbeitung des anliegenden digitalen Eingangsdatenstromes durch, wobei die Datenverarbeitungseinheit mit einem Taktsignal getaktet wird, dessen Taktfrequenz der an die Datenverarbeitungsgeschwindigkeit angepaßte Datenübertragungsrate des digitalen Eingangsdatenstromes entspricht.

Der Nachteil des digitalen Echtzeit-Datenverarbeitungssystems nach dem Stand der Technik, wie es in Fig. 2 dargestellt ist, besteht darin, daß das Taktsignal zur Taktung der Datenverarbeitungseinheit erst über schaltungstechnisch aufwendige Taktvervielfachungsschaltungen, wie beispielsweise Phasenregelschleifen PLL, erzeugt werden müssen. Dabei muß für jede Datenquelle eine eigene Taktvervielfachungsschaltung PLL vorgesehen werden, da nur in seltenen Fällen ein gemeinsames Vielfaches aller beteiligten Datenübertragungsraten als Referenzsignal zur Verfügung steht. Die Phasenregelschleifen PLL sind schaltungstechnisch relativ aufwendig, da sie einen abstimmbaren Oszillator beinhalten. Bei integrierten Schaltungen stellen derartige analoge Komponenten, wie ein abstimmbarer Oszillator, hohe Anforderungen an die verwendete Herstellungstechnologie und führen somit zu höheren Herstellungskosten. Ferner kann ein stabiles und jitterfreies Taktsignal durch eine PLL-Schaltung nur mit hohem schaltungstechnischem Aufwand geliefert werden, so daß auch der Strom- und Flächenbedarf hierfür relativ hoch ist. *Da Phasenregelschleifen PLL* eine endliche Einschwingzeit aufweisen, muß für jede digitale Datenquelle eine eigene Phasenregelschleife vorgesehen werden, so daß bei beispielsweise 32 digitalen Datenquellen DQ auch 32 Phasenregelschleifen in dem herkömmlichen digitalen Echtzeit-Datenverarbeitungssystem, wie es in Fig. 2 dargestellt ist, benötigt werden.

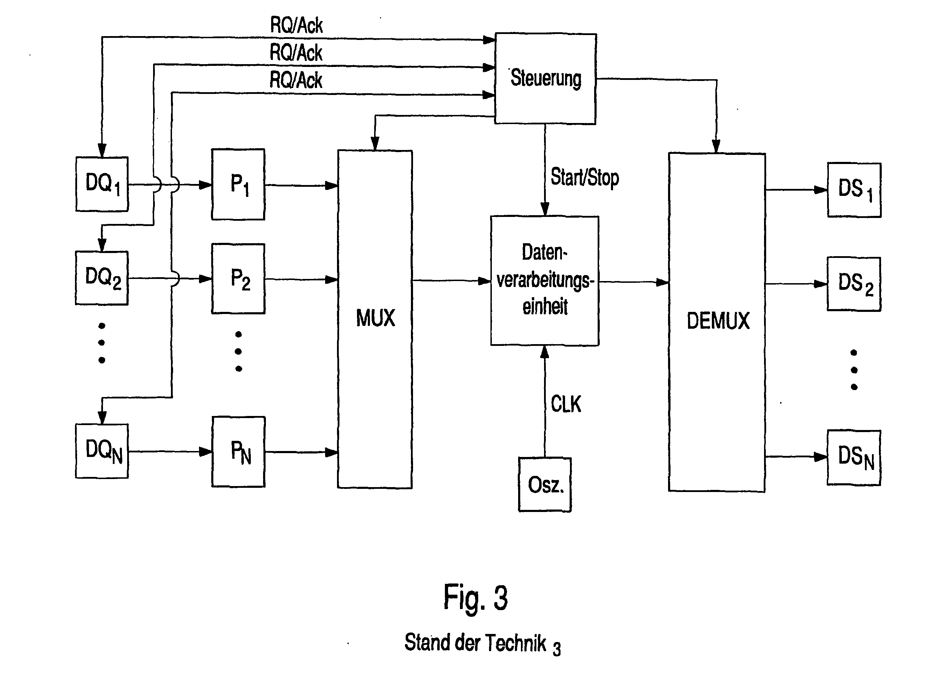

Fig. 3 zeigt ein drittes digitales Echtzeit-Datenverarbeitungssystem nach dem Stand der Technik. Bei diesem digitalen Echtzeit-Datenverarbeitungssystem nach dem Stand der Technik fordern die digitalen Datenquellen DQ unabhängig voneinander Verarbeitungszeit von der Datenverarbeitungseinheit an. Die Anforderung (request) erfolgt durch ein von der Datenquelle DQ abgegebenes Steuersignal. Alternativ dazu ist es auch möglich, daß die Datenverarbeitungseinheit die Verfügbarkeit von Datenverarbeitungszeit den verschiedenen digitalen Datenquellen anzeigt, die daraufhin die Daten bereitstellen.

Der Nachteil des in Fig. 3 dargestellten digitalen Echtzeit-Datenverarbeitungssystems nach dem Stand der Technik besteht in dem sehr hohen Steuerungsaufwand, da unabhängige Datenverarbeitungsvorgänge priorisiert und nacheinander durch die Datenverarbeitungseinheit bedient werden müssen. Die Steuerung muß bei dem digitalen Echtzeit-Datenverarbeitungssystem nach dem Stand der Technik, wie es in Fig. 3 dargestellt ist, eine Verwaltung der empfangenen Datenverarbeitungsanforderungen durchführen und eine Reihenfolge der Datenverarbeitung durch die Datenverarbeitungseinheit festlegen. In Abhängigkeit von der Datenübertragungsrate der von einer Datenquelle DQ empfangenen Daten ergeben sich dabei variierende Datenverarbeitungszeiten, so daß die Pufferspeicher relativ große Speichergrößen aufweisen müssen. Die Signale zur Datenverarbeitungsanforderung werden entweder durch die Datenquellen DQ selbst generiert oder aus den Datenfüllzuständen der Pufferspeicher ermittelt. Die Implementation eines derartigen digitalen Echtzeit-Datenverarbeitungssystems erfordert einen sehr hohen schaltungstechnischen Aufwand, der den schaltungstechnischen Aufwand für die eigentliche Datenverarbeitungseinheit sogar übersteigt.

Es ist daher die Aufgabe der vorliegenden Erfindung, ein Verfahren und ein System zur digitalen Echtzeit-Datenverarbeitung zu schaffen, das in der Lage ist, mehrere Eingangsdatenströme mit unterschiedlichen Datenübertragungsraten bei gleichzeitig niedrigem schaltungstechnischen Aufwand zu verarbeiten.

Diese Aufgabe wird erfindungsgemäß durch ein digitales Echtzeit-Datenverarbeitungssystem mit den im Patentanspruch 1 angegebenen Merkmalen und durch ein Verfahren zur digitalen Echtzeit-Datenverarbeitung mit den im Patentanspruch 15 angegebenen Merkmalen gelöst.

Die Erfindung schafft ein digitales Echtzeit-Datenverarbeitungssystem, das digitale Eingangsdatenströme, die von mehreren digitalen Datenquellen empfangen werden, zu digitalen Ausgangsdatenströmen verarbeitet und an digitale Datensenken abgibt,

wobei das digitale Datenverarbeitungssystem aufweist:

(a) mehrere Eingangspufferspeicher, die jeweils die Daten eines empfangenen digitalen Eingangsdatenstromes zwischenspeichern;
(b) mindestens einen steuerbaren Multiplexer, dessen Eingang jeweils mit einem Eingangspufferspeicher verbunden sind;
(c) mindestens einer getakteten Datenverarbeitungseinheit zur Datenverarbeitung der von einem Ausgang des Multiplexers abgegebenen zwischengespeicherten Daten,
wobei die Datenverabeitungseinheit mit einem Taktsignal getaktet wird, dessen Taktfrequenz dem Produkt der maximalen Datenübertragungsrate aller Eingangs- und Ausgangsdatenströme und der Anzahl der Datenquellen und Datensenken entspricht;
(d) mindestens einem steuerbaren Demultiplexer, über dessen Ausgänge die verarbeiteten Daten als digitale Ausgangsdatenströme an die digitalen Datensenken abgegeben werden; und
(e) eine Steuereinheit zur Ansteuerung des Multiplexers, des Demultiplexers und der Datenverarbeitungseinheit,

wobei die Steuereinheit die Eingänge des Multiplexers zyklisch jeweils für einen konstanten Zeitbruchteil der Zykluszeit an den zugehörigen Pufferspeicher schaltet,
wobei die Steuereinheit die Ausgänge des Demultiplexers zyklisch jeweils für den konstanten Zeitbruchteil an die zugehörige digitale Datensenke schaltet, und
wobei die Steuereinheit die Datenverarbeitungseinheit zur Datenverarbeitung der von dem Multiplexer durchgeschalteten Daten eines mit einer bestimmten Datenübertragungsrate empfangenen digitalen Eingangsdatenstromes jeweils für eine variable Datenverarbeitungszeit aktiviert.

Die Steuereinheit des erfindungsgemäßen digitalen Echtzeit-Datenverarbeitungssystems berechnet dabei die Datenverarbeitungszeit vorzugsweise derart, daß das Verhältnis zwischen der Datenverarbeitungszeit und dem maximal zur Verfügung stehenden konstanten Zeitbruchteil der Zykluszeit gleich dem Verhältnis zwischen der Datenübertragungsrate des zu verarbeitenden digitalen Eingangsdatenstromes und der maximalen Datenübertragungsrate von allen Eingangs- und Ausgangsdatenströmen ist.

Bei einer bevorzugten weiteren Ausführungsform aktiviert die Steuereinheit des erfindungsgemäßen digitalen Echtzeit-Datenverarbeitungssystems die Datenverarbeitungseinheit zur Datenverarbeitung der von dem Multiplexer durchgeschalteten Daten eines digitalen Eingangsdatenstromes für eine erste Anzahl von Zyklen und deaktiviert die Datenverarbeitungseinheit für eine zweite Anzahl von Zyklen, wobei das Verhältnis zwischen der Anzahl der deaktivierten Zyklen und der Anzahl der aktivierten Zyklen von dem Verhältnis zwischen der maximalen Übertragungsrate von allen Eingangs- und Ausgangsdatenströmen und der Datenübertragungsrate des zu bearbeitenden digitalen Eingangsdatenstromes abhängt.

Die Steuereinheit des erfindungsgemäßen digitalen Echtzeit-Datenverarbeitungssystems deaktiviert die Datenverarbeitungseinheit vorzugsweise nach Ablauf der Datenverarbeitungszeit.

Bei einer bevorzugten Ausführungsform des erfindungsgemäßen digitalen Echtzeit-Datenverarbeitungssystems werden die von den Ausgängen des Demultiplexers abgegebenen verarbeiteten Daten in Ausgangspufferspeicher zwischengespeichert.

Die Datenverarbeitungseinheit deaktiviert die Datenverarbeitungseinheit zur Datenverarbeitung der Daten eines digitalen Eingangsdatenstromes vorzugsweise, wenn der erfaßte Datenfüllzustand des zugehörigen Ausgangspufferspeichers einen einstellbaren Schwellenwert überschreitet.

Bei einer besonders bevorzugten Ausführungsform des erfindungsgemäßen digitalen Echtzeit-Datenverarbeitungssystems steuert die Steuereinheit zur Deaktivierung der Datenverarbeitungseinheit eine Schalteinrichtung an, die das Taktsignal zur Taktung der Datenverarbeitungseinheit unterbricht.

Bei einer bevorzugten Ausführungsform des erfindungsgemäßen digitalen Echtzeit-Datenverarbeitungssystems werden die digitalen Eingangsdatenströme von Analog-/Digitalwandlern geliefert.

Bei einer besonders bevorzugten Ausführungsform des erfindungsgemäßen digitalen Echtzeit-Datenverarbeitungssystems sind die Eingangspufferspeicher Swinging-Puffer oder Ringpuffer.

Die Anzahl der digitalen Datenquellen ist vorzugsweise gleich der Anzahl der digitalen Datensenken.

Bei einer bevorzugten Ausführungsform des erfindungsgemäßen digitalen Echtzeit-Datenverarbeitungssystems beinhaltet diese eine Taktsignal-Erzeugungsschaltung, die die Datenübertragungsrate aller digitalen Eingangsströme und aller digitalen Ausgangsdatenströme erfaßt und ein Taktsignal generiert, dessen Taktfrequenz der maximalen erfaßten Datenübertragungsrate entspricht.

Bei einer bevorzugten Ausführungsform des erfindungsgemäßen digitalen Echtzeit-Datenverarbeitungssystems ist ferner eine Frequenz-Vervielfachungsschaltung vorgesehen, welche die generierte Taktfrequenz des von der Taktsignal-Erzeugungsschaltung abgegebenen Taktsignals mit einem konstanten Faktor zur Erzeugung eines Taktsignals zur Taktung der Datenverarbeitungseinheit multipliziert.

Dabei entspricht der Faktor vorzugsweise der Anzahl der Datenquellen und der Anzahl der Datensenken.

Die Erfindung schafft ferner ein Verfahren zur digitalen Echtzeit-Datenverarbeitung von Daten, die von einer Anzahl von digitalen Datenquellen abgegeben werden, mit den folgenden Schritten:

(a) Empfangen von mehreren digitalen Eingangsdatenströmen mit unterschiedlichen Datenübertragungsraten von den Datenquellen;
(b) Zwischenspeichern der empfangenen digitalen Eingangsdatenströme in zugehörigen Eingangspufferspeichern;
(c) zyklisches Verarbeiten aller empfangenen digitalen Eingangsdatenströme durch eine Datenverarbeitungseinheit, wobei die Datenverarbeitungseinheit mit einem Taktsignal getaktet wird, dessen Taktfrequenz dem Produkt der maximalen Datenübertragungsrate von allen Eingangs- und Ausgangsdatenströmen und der Anzahl der digitalen Datenquellen entspricht, und
wobei die jeweilige Verarbeitungszeit zum Verarbeiten eines digitalen Eingangsdatenstromes variabel eingestellt wird;
(d) Ausgeben der verarbeiteten digitalen Eingangsdatenströme als digitale Ausgangsdatenströme an digitale Datensenken.

Im weiteren werden bevorzugte Ausführungsformen des erfindungsgemäßen digitalen Echtzeit-Datenverarbeitungssystems und des erfindungsgemäßen Verfahrens zur digitalen Echtzeit-Datenverarbeitung unter Bezugnahme auf die beigefügten Figuren zur Erläuterung erfindungswesentlicher Merkmale beschrieben.

Es zeigen:

Fig. 1 ein erstes digitales Echtzeit-Datenverarbeitungssystem nach dem Stand der Technik;

Fig. 2 ein zweites digitales Echtzeit-Datenverarbeitungssystem nach dem Stand der Technik;

Fig. 3 ein drittes digitales Echtzeit-Datenverarbeitungssystem nach dem Stand der Technik;

Fig. 4 eine erste Ausführungsform des erfindungsgemäßen digitalen Echtzeit-Datenverarbeitungssystems;

Fig. 5 eine zweite Ausführungsform des erfindungsgemäßen digitalen Echtzeit-Datenverarbeitungssystems;

Fig. 6 eine dritte Ausführungsform des erfindungsgemäßen digitalen Echtzeit-Datenverarbeitungssystems;

Fig. 7 ein Zeitablaufdiagramm zur Erläuterung der Funktionsweise des erfindungsgemäßen digitalen Echtzeit-Datenverarbeitungssystems;

Fig. 8 ein weiteres Zeitablaufdiagramm zur Erläuterung der Funktionsweise einer alternativen Ausführungsform des digitalen Echtzeit-Datenverarbeitungssystems gemäß der Erfindung;

Fig. 9 ein erstes Ablaufdiagramm zur Erläuterung des erfindungsgemäßen digitalen Echtzeit-Datenverarbeitungsverfahrens;

Fig. 10 ein weiteres Ablaufdiagramm zur Erläuterung einer bevorzugten Ausführungsform des erfindungsgemäßen Echtzeit-Datenverarbeitungsverfahrens.

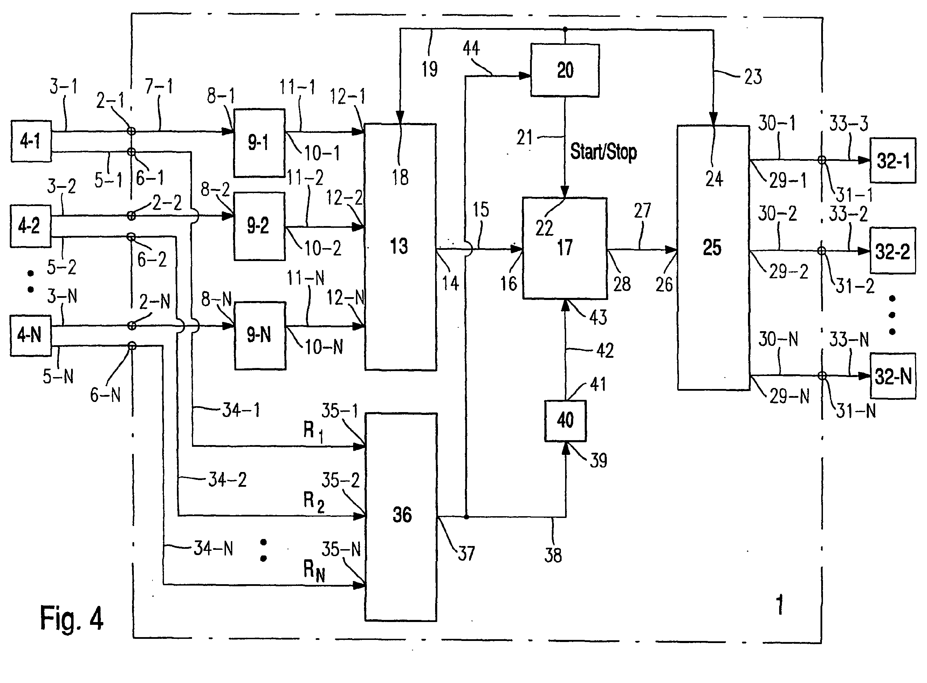

Fig. 4 zeigt eine erste Ausführungsform des digitalen Echtzeit-Datenverarbeitungssystems gemäß der Erfindung. Das digitale Echtzeit-Datenverarbeitungssystem 1 ist eingangsseitig über Dateneingänge 2 über Datenleitungen 3 bzw. Datenbusse 3 an digitale Datenquellen 4 angeschlossen, die zeitweise oder kontinuierlich einen digitalen Datenstrom abgeben. Die digitalen Datenquellen 4 geben einen digitalen Datenstrom mit unterschiedlichen Datenübertragungsraten R ab. Bei einer ersten Ausführungsform des erfindungsgemäßen digitalen Echtzeit-Datenverarbeitungssystems 1 sind die Datenraten der verschiedenen digitalen Eingangsdatenströme vorgegeben. Bei einer alternativen Ausführungsform erzeugen die digitalen Datenquellen auf ihr jeweils ein Referenzsignal, dessen Taktfrequenz der Datenübertragungsrate des zugehörigen Datenstromes entspricht. Dieses Referenzsignal wird von der digitalen Datenquelle über eine Leitung 5 an einen Referenzsignaleingang 6 des digitalen Echtzeit-Datenverarbeitungssystems 1 angelegt.

Die Dateneingänge 2 sind über interne Datenleitungen bzw. einen Datenbus 7 mit einem Eingang 8 eines Eingangspufferspeichers 9 verbunden. Jeder Eingangspufferspeicher 9 speichert die Daten des empfangenen digitalen Eingangsdatenstromes zwischen und gibt sie über einen Ausgang 10 über einen Datenbus 11 an einen Eingang 12 eines steuerbaren Multiplexers 13 ab. Die Pufferspeicher 9 bzw. Datenratenkonverter 9 sind nicht zwingend erforderlich, sondern werden vorzugsweise dann vorgesehen, wenn die digitalen Datenquellen 4 einen kontinuierlichen Datenstrom liefern. Der Multiplexer 13 weist einen Signalausgang 14 auf, der über eine Datenleitung bzw. über einen Datenbus 15 mit einem Dateneingang 16 der Datenverarbeitungseinheit 17 verbunden ist. Der Multiplexer 13 weist ferner einen Steuereingang 18 auf, der über eine Steuerleitung 19 durch eine Steuereinheit 20 des digitalen Echtzeit-Datenverarbeitungssystems 1 angesteuert wird. Die Steuereinheit 20 ist ferner über eine Steuerleitung 21 mit einem Steuereingang 22 der Datenverarbeitungseinheit 17 und über eine Steuerleitung 23 mit einem Steuereingang 24 einer Demultiplexerschaltung 25 verbunden. Die Demultiplexerschaltung 25 besitzt einen Signaleingang 26, der über Datenleitungen bzw. einen Datenbus 27 an einen Datenausgang 28 der digitalen Datenverarbeitungseinheit 17 angeschlossen ist. Der Demultiplexer 25 weist mehrere Ausgänge 29 auf, die über Datenleitungen bzw. Datenbusse 30 mit Datenausgängen 31 des digitalen Echtzeit-Datenverarbeitungssystems 1 verbunden sind. An die Datenausgänge 31 sind digitale Datensenken 32 über Datenleitungen bzw. Busse 33 angeschlossen.

Bei der in Fig. 1 dargestellten Ausführungsform sind die Datenübertragungsraten der verschiedenen digitalen Datenquellen 4 nicht festgelegt, und das digitale Echtzeit-Datenverarbeitungssystem ermittelt aus den an den Referenzsignaleingängen 6 anliegenden Referenzsignalen die maximale anliegende Datenübertragungsrate. Hierzu sind die Referenzsignaleingänge über Leitungen 34 mit Eingängen 35 einer Taktsignal-Erzeugungsschaltung 36 verbunden. Die Taktsignal-Erzeugungsschaltung 36 erzeugt aus den anliegenden Referenztaktsignalen, deren Taktfrequenz jeweils der zugehörigen Datenübertragungsrate entspricht, dasjenige Referenzsignal, dessen Taktfrequenz der maximalen erfaßten Datenübertragungsrate entspricht. Dieses Taktsignal wird von der Taktsignal-Erzeugungsschaltung 36 über einen Ausgang 37 und eine Leitung 38 an einen Signaleingang 39 einer Frequenz-Vervielfachungsschaltung 40, beispielsweise eine PLL-Schaltung, abgegeben.

Die Frequenz-Vervielfachungsschaltung 40 erhöht die Taktfrequenz des anliegenden Taktsignals um einen konstanten Faktor, der vorzugsweise gleich der Anzahl N der an dem digitalen Echtzeit-Datenverarbeitungssystem 1 angeschlossenen Datenquellen 4 bzw. der Anzahl der digitalen Datensenken 32 entspricht. Das von der Frequenz-Vervielfachungsschaltung 40 über einen Signalausgang 41 abgegebene Taktsignal gelangt über eine Taktleitung 42 zu einem Takteingang 43 der Datenverarbeitungseinheit 17. Die Datenverarbeitungseinheit 17 wird somit mit einem Taktsignal getaktet, dessen Taktfrequenz dem Produkt aus der maximalen Datenübertragungsrate aller Eingangsdatenströme und der Anzahl N der angeschlossenen digitalen Datenquellen 4 bzw. digitalen Datensenken 32 entspricht. Bei einer weiteren Ausführungsform werden zusätzlich die Datenübertragungsraten der Ausgangsdatenströme durch die Taktsignal-Erzeugungsschaltung 36 erfaßt, wobei die Taktsignal-Erzeugungsschaltung 36 ein Taktsignal abgibt, dessen Taktfrequenz dem Produkt aus der maximalen Datenübertragungsrate aller Eingangs- und Ausgangsdatenströme und der Anzahl der angeschlossenen Datenquellen 4 bzw. Datensenken 32 entspricht.

Bei einer bevorzugten Ausführungsform des erfindungsgemäßen digitalen Echtzeit-Datenverarbeitungssystems 1 sind die verschiedenen Datenübertragungsraten der von den digitalen Datenquellen 4 abgegebenen Eingangsdatenströme und die Datenübertragungsraten der an die Datensenken 32 abgegebenen Ausgangsdatenströme vorgegeben, und das Taktsignal zur Taktung der digitalen Datenverarbeitungseinheit 17 wird in einem Oszillatorschaltkreis erzeugt, der ein Taktsignal mit einer Taktfrequenz abgibt, die dem Produkt der vorgegebenen maximalen Datenübertragungsrate aller Eingangs- und Ausgangsdatenströme und der Anzahl der Datenquellen 4 bzw. der Datensenken 32 entspricht.

Die in Fig. 4 dargestellte Ausführungsform des digitalen Echtzeit-Datenverarbeitungssystems 1 ermöglicht den Einsatz des Datenverarbeitungssystems auch bei digitalen Datenquellen, deren Datenübertragungsraten nicht bekannt sind.

Die Steuereinheit 20 übernimmt die Ansteuerung des Multiplexers 13, des Demultiplexers 25 sowie der Datenverarbeitungseinheit 17. Die Steuereinheit 20 steuert den Multiplexer 13 über die Steuerleitung 19 derart an, daß die Signaleingänge 12 des Multiplexers 13 zyklisch an den Signalausgang 14 des Multiplexers 13 durchgeschaltet werden. Innerhalb eines Zyklus wird zunächst der Eingang 12-1 und anschließend die weiteren Eingänge 12-2, 12-3 bis 12-N des Multiplexers 13 durchgeschaltet und anschließend der Durchschaltzyklus beliebig oft wiederholt. Die Zykluszeit ist dabei konstant. Jeder Eingang wird für einen bestimmten konstanten Zeitbruchteil an den Ausgang 14 des Multiplexers 13 und somit an den Dateneingang 16 der Datenverarbeitungseinheit 17 durchgeschaltet. Gleichzeitig schaltet die Steuereinheit 20 über die Steuerleitung 23 den Signaleingang 26 des Demultiplexers 25 zyklisch an die Datenausgänge 29-1 bis 29-N durch. Die Steuereinheit aktiviert ferner über eine Steuerleitung 21 die digitale Datenverarbeitungseinheit 17 zur Datenverarbeitung des an dem Dateneingang 16 anliegenden durchgeschalteten Datenstromes, der jeweils mit einer bestimmten Datenübertragungsrate empfangen wird, für eine variable Datenverarbeitungszeit.

Bei der in Fig. 4 dargestellten Ausführungsform des erfindungsgemäßen Datenverarbeitungssystems 1 berechnet die Steuereinheit 20 die Datenverarbeitungszeit derart, daß das Verhältnis zwischen der Datenverarbeitungszeit zu dem maximal zur Verfügung stehenden konstanten Zeitbruchteil der Zykluszeit gleich dem Verhältnis zwischen der Datenübertragungsrate des zu verarbeitenden digitalen Eingangsdatenstromes und der maximalen Datenübertragungsrate von allen Eingangs- und Ausgangsdatenströmen ist.

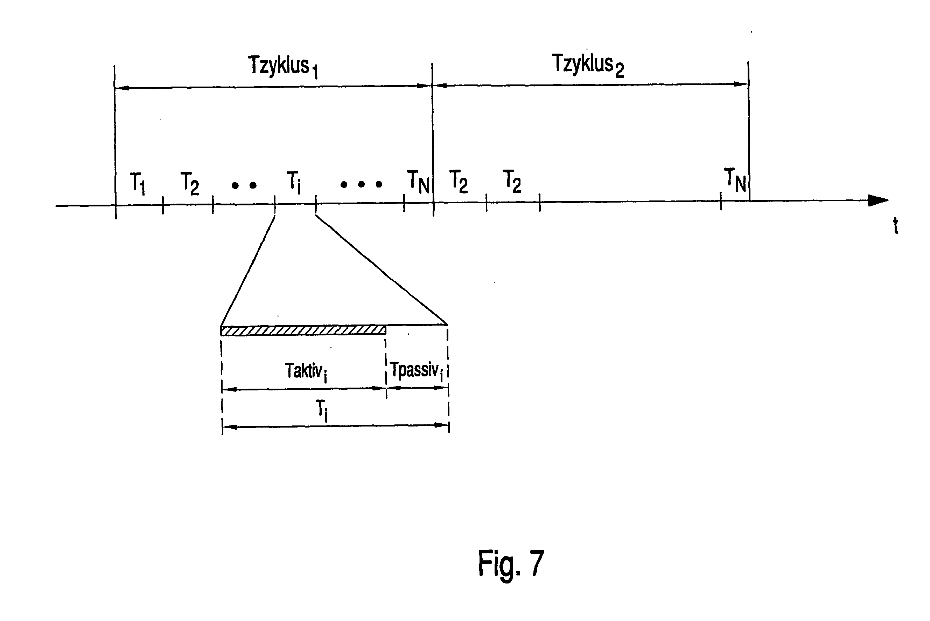

Fig. 7 zeigt ein Zeitablaufdiagramm zur Erläuterung der Funktionsweise des erfindungsgemäßen digitalen Datenverarbeitungssystems 1. Die verschiedenen digitalen Eingangsdatenströme, die von den N digitalen Datenquellen 4 stammen, werden zyklisch von dem Multiplexer 13 an den Dateneingang 16 der digitalen Datenverarbeitungseinheit durchgeschaltet, wobei die Zykluszeit $T_{Zyklus}$ konstant ist, so daß zur Datenverarbeitung eines Kanals bzw. eines digitalen Eingangsdatenstromes durch die Datenverarbeitungseinheit 17 ein konstanter Zeitbruchteil $T_i$ der Zykluszeit $T_{Zyklus}$ zur Verfügung steht.

Bei einer ersten Ausführungsform wird die Datenverarbeitungseinheit 17 durch die Steuereinheit 20 zu Anfang eines jeden Zeitbruchteils über die Steuerleitung 21 zur Datenverarbeitung aktiviert und nach einer ermittelten variablen Datenverarbeitungszeit für diesen Kanal über die Steuerleitung 21 deaktiviert.

Es gilt:

$$T_{Zyklus} = \sum_{i=1}^{N} T_i = \text{konstant} \qquad (1)$$

$$T_i = T_{aktiv_i} + T_{passiv_i} = \text{konstant} \qquad (2)$$

Bei der in Fig. 4 dargestellten Ausführungsform berechnet die Steuereinheit 20 die aktive Datenverarbeitungszeit $T_{aktiv_i}$ für den i-ten digitalen Eingangsdatenstrom gemäß folgender Gleichung:

$$T_{aktiv_i} = \frac{R_i}{R_{max}} \cdot T_i \qquad (3)$$

wobei $R_i$ die Datenübertragungsrate des gerade zu verarbeitenden digitalen Eingangsdatenstromes und $R_{max}$ die maximale Datenübertragungsrate von allen digitalen Eingangs- und Ausgangsdatenströmen ist. Die maximale digitale

Datenübertragungsrate $R_{max}$ ist entweder vorbekannt und in der Steuereinheit 20 abgespeichert oder wird bei der in Fig. 4 dargestellten Ausführungsform über eine Leitung 44 von der Taktsignal-Erzeugungseinrichtung 36 durch die Steuereinheit 20 eingelesen. Die Datenübertragungsrate $R_i$ des gerade zu verarbeitenden digitalen Eingangsdatenstromes ist ebenfalls entweder vorbekannt oder wird in den Referenzsignaleingängen 6 durch die Steuereinheit 20 eingelesen.

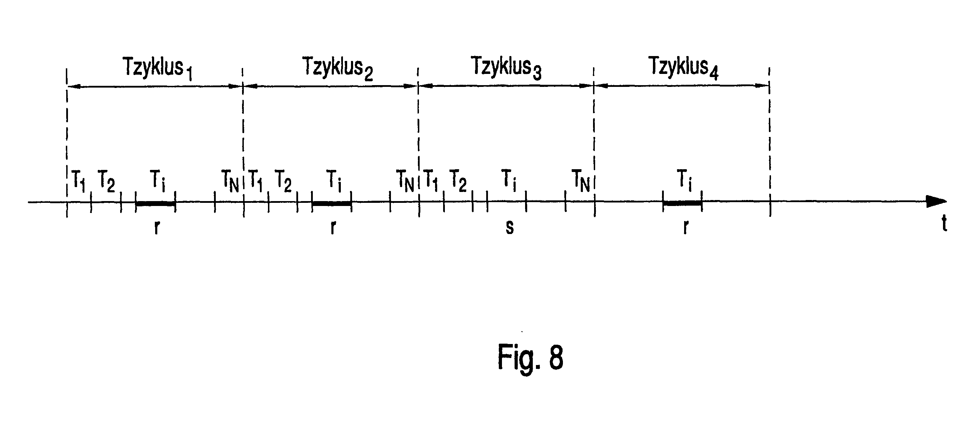

Fig. 7 zeigt eine weitere alternative Funktionsweise des erfindungsgemäßen Echtzeit-Datenverarbeitungssystems. Bei dieser Ausführungsform besitzt das Echtzeit-Datenverarbeitungssystem eingangsseitig die in Fig. 4 dargestellten Eingangsdatenpuffer, so daß es möglich ist, den Abschaltvorgang für einen digitalen Eingangsdatenstrom auf einen kompletten Zeitbruchteil $T_i$ der Zykluszeit $T_{Zyklus}$ auszudehnen und trotzdem eine Echtzeitverarbeitung zu gewährleisten. Der Vorteil der in Fig. 8 dargestellten Vorgehensweise besteht darin, daß die Anzahl der Start- und Stoppvorgänge der Datenverarbeitungseinheit gegenüber der in Fig. 7 dargestellten Vorgehensweise stark verringert wird.

Der digitale Eingangsdatenstrom i wird beispielsweise, wie in Fig. 8 dargestellt, während der beiden ersten Zyklen für die gesamt maximal zu Verfügung stehende Zeitdauer $T_i$, d.h. für den gesamten zur Verfügung stehenden Zeitbruchteil der Zykluszeit, aktiviert und im dritten Zyklus vollständig deaktiviert. Das Verhältnis zwischen der Anzahl der nacheinander aktivierten Zeitbruchteile $T_i$ und der Anzahl der anschließend deaktivierten Zeitbruchteile $T_i$ wird durch die Steuereinheit 20 ermittelt, wobei gilt:

$$\frac{S_i}{r_i} = \frac{R_{max}}{R_i} - 1 \qquad\qquad (4)$$

wobei
S die Anzahl der inaktiven Zeitabschnitte (stop) und
R die Anzahl der aktiven Zeitabschnitte (run) angibt.

Während der aktiven Zeitbruchteile R arbeitet die Datenverarbeitungseinheit 17 mit der maximalen Taktfrequenz, die der maximalen Obertragungsrate $R_{max}$ entspricht.

Die Speichergröße $m_i$ des jeden Eingangsdaten-Pufferspeichers 9, die notwendig ist, die Zwischenspeicherung der Datenmenge beträgt dabei mindestens:

$$m_i = (1+s_i) \cdot N \cdot T_i \cdot R_i \qquad\qquad (5)$$

Sobald es zu einem Leerlauf des Eingangspufferspeichers 9 kommt, wird bei der bevorzugten Ausführungsform des erfindungsgemäßen Datenverarbeitungssystems die Datenverarbeitung einer für diesen Kanal für s Zyklen deaktiviert, so daß sich der Eingangspufferspeicher 9 wieder füllt.

Dabei beträgt die Anzahl der deaktivierten Zyklen vorzugsweise 1.

Die in Zusammenhang mit Fig. 8 beschriebene Ausführungsform wird vorteilhafterweise immer dann eingesetzt, wenn die Datenverarbeitungseinheit bei verschiedenen Datenübertragungsraten $r_i$ auf gleich große Datenblöcke bei jedem Eingangskanal zugreifen muß, wie beispielsweise bei einer N.FFT-Transformation mit festen n. Bei einer besonders bevorzugten Ausführungsform wird hierbei der Datenfüllzustand der Eingangsdatenpuffer 9 durch die Steuereinheit 20 überwacht. Fällt dabei der Datenfüllzustand des eingangsseitigen Datenpuffers unter einen Schwellenwert, wird die Datenverarbeitungseinheit 17 im nächsten Zyklus für den zugeordneten Zeitbruchteil deaktiviert.

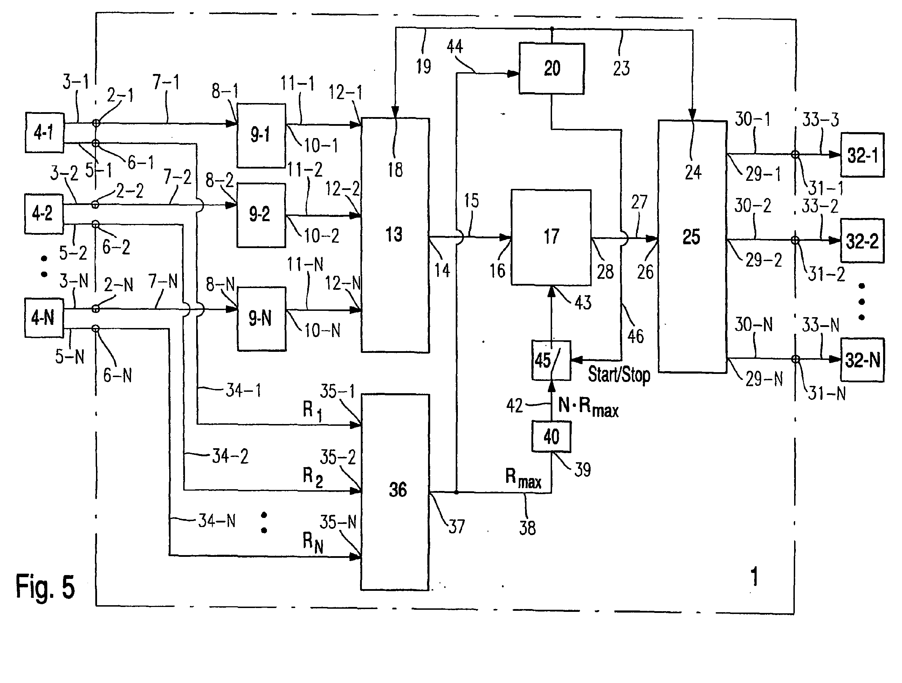

Fig. 5 zeigt eine weitere Ausführungsform des erfindungsgemä-βen digitalen Datenverarbeitungssystems 1, die weitestgehend der in Fig. 4 dargestellten Ausführungsform entspricht. Bei der in Fig. 5 dargestellten Ausführungsform ist zusätzlich eine Schalteinheit 45 vorgesehen, die über eine Steuerleitung 46 von der Steuereinheit 20 angesteuert wird. Bei der in Fig. 5 dargestellten Ausführungsform erfolgt die Aktivierung bzw. Deaktivierung der digitalen Datenverarbeitungseinheit 17 über das Ein- bzw. Ausschalten des an dem Taktsignaleingang 43 anliegenden Taktsignals.

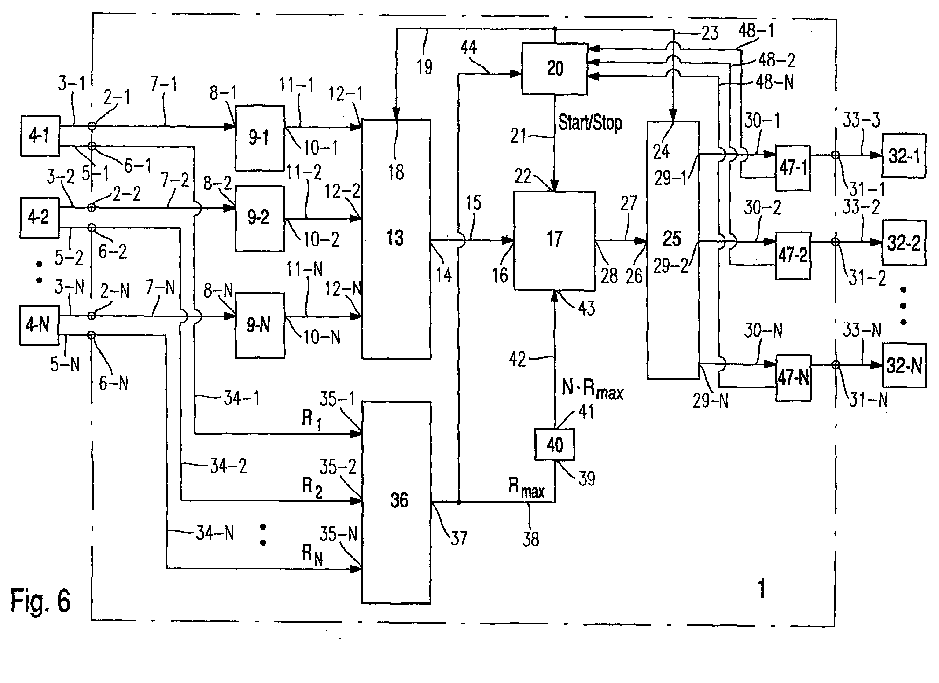

Fig. 6 zeigt eine weitere Ausführungsform des erfindungsgemäßen Datenverarbeitungssystems 1, bei dem die variable Datenverarbeitungszeit für die verschiedenen Eingangskanäle durch die Steuereinheit 20 aus den Datenfüllzuständen von zusätzlich vorgesehenen Ausgangsdatenpuffern 47-1 bis 47-N ermittelt wird. Dabei wird die digitale Datenverarbeitungseinheit 17 durch die Steuereinheit 20 über die Steuerleitung 21 deaktiviert, wenn der erfaßte Datenfüllzustand des zugehörigen Ausgangsdatenpuffers 47 einen einstellbaren Schwellenwert überschreitet. Der Datenfüllzustand eines Ausgangsdaten-Pufferspeichers 47 wird über eine zugehörige Leitung 48 an die Steuereinheit 20 gemeldet. Sobald eine Datenmenge $T_i \cdot R_i$ in dem Ausgangspufferspeicher 47 abgespeichert worden ist, wird die Datenverarbeitungseinheit 17 den restlichen Zeitbruchteil $T_i$ abgeschaltet.

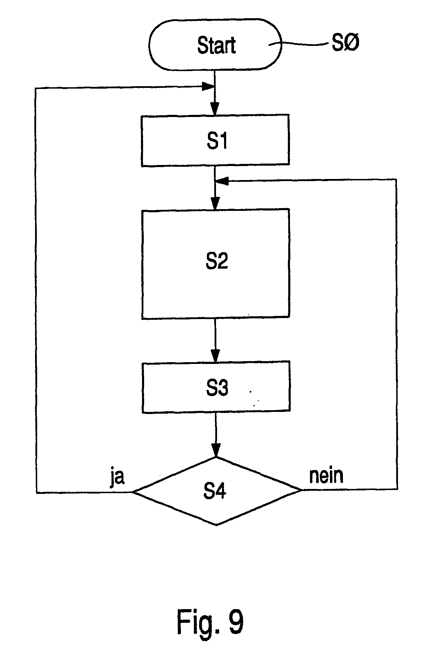

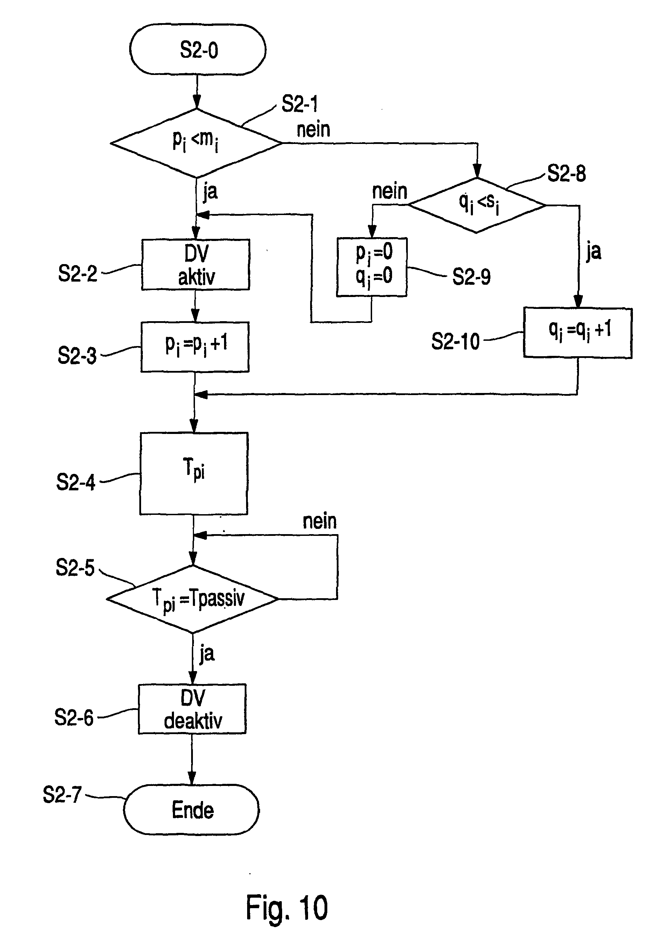

Fig. 9 zeigt ein Zeitablaufdiagramm zur Erläuterung des erfindungsgemäßen Verfahrens zur digitalen Echtzeit-Datenverarbeitung. Nach einem Startschritt S0 wird im Schritt S1 ein Kanalzähler initialisiert bzw. auf 0 gesetzt. In einem Unterprogramm S2, das in Fig. 10 dargestellt ist, erfolgt die Datenverarbeitung des i-ten Eingangsdatenstromes durch die Datenverarbeitungseinheit 17, und in einem Schritt S3 wird der Kanalzähler inkrementiert. In einem Schritt S4 wird überprüft, ob alle Eingangsdatenströme innerhalb eines Zyklus verarbeitet worden sind bzw. ob der Kanalzähler die maximale Kanalzahl N erreicht hat oder nicht. Wenn alle Eingangsdatenströme innerhalb eines Zyklus verarbeitet worden sind, kehrt der Vorgang zu Schritt S1 zurück, so daß der nächste Zyklus beginnen kann. Im umgekehrten Falle erfolgt die Datenverarbeitung für den nächsten Eingangskanal bzw. nächsten digitalen Eingangsdatenstrom.

Fig. 10 zeigt eine bevorzugte Ausführungsform des in Fig. 9 dargestellten Unterprogramms S2. In einem Schritt S2-1 wird geprüft, ob ein Zähler p kleiner ist als die ermittelte Anzahl von aktiven Zeitzyklen r für den i-ten Kanal oder nicht. Wenn die notwendige Anzahl zum aktiven Zeitbruchteil $T_i$ noch nicht erreicht worden ist, wird die Datenverarbeitungseinheit 17 in einem Schritt S2-2 zur Datenverarbeitung aktiviert und in einem Schritt S2-3 der Fehler p inkrementiert. In einem Schritt S2-4 wird ein Passivzeitzähler Tp aktiviert, und in einem Schritt S2-5, ... ob die restliche passive Zeit $T_{passiv}$ abgelaufen ist oder nicht. Nach Ablauf der restlichen passiven Zeit $T_{passiv}$ und somit des Zeitbruchteils $T_i$ wird in einem Schritt S2-6 die Datenverarbeitungseinheit 17 deaktiviert und in einem Schritt S2-7 das Unterprogramm belassen.

Falls im Schritt S2-1 festgestellt wird, daß die notwendige Anzahl von aktiven Zeitzyklen für diesen Kanal bereits erreicht worden ist, wird in einem Schritt S2-8 geprüft, ob die Anzahl der notwendigen inaktiven (Stop-)Zyklen erreicht worden ist oder nicht. Wenn der Zähler q die notwendige Anzahl s von inaktiven Zyklen erreicht hat, werden in einem Schritt S2-9 die beiden Zähler p, q zurückgesetzt. Im umgekehrten Fall wird in einem Schritt S2-10 der Zähler q für die inaktiven Zyklen inkrementiert, ohne daß die Datenverarbeitungseinheit 17 aktiviert wird.

Das erfindungsgemäße digitale Echtzeit-Datenverarbeitungssystem kann sowohl für digitale Datenquellen mit konstanten vorbekannten Datenübertragungsraten als auch für Datenquellen eingesetzt werden, deren Datenübertragungsraten variieren. Durch kurzzeitige Unterbrechungen der Datenverarbeitung durch die Datenverarbeitungseinheit 17, die im aktiven Zustand mit der höchsten zu erwartenden Datenübertragungsrate arbeitet, wird die Datenverarbeitungseinheit in einem Zeitmultiplexbetrieb mit den digitalen Datenquellen, die unterschiedliche Datenübertragungsraten aufweisen, verbunden, ohne daß eine schaltungstechnisch aufwendige Steuerung erforderlich wird.

Das feste Zeitraster führt zu gleichen Datendurchlaufzeiten für die verschiedenen Datenquellen einer minimalen Speichergröße der Pufferspeicher.

Bei der in Fig. 5 dargestellten Ausführungsform erfolgt die Unterbrechung der Datenverarbeitung durch Abschalten des Arbeitstaktes, so daß sich diese Ausführungsform durch besonders niedrigen Leistungsverbrauch auszeichnet. Das erfindungsgemäße digitale Echtzeit-Datenverarbeitungssystem kann besonders vorteilhaft bei Anwendungen eingesetzt werden, bei denen verschiedene digitale Datenquellen mit leicht unterschiedlichen Datenübertragungsraten vorhanden sind. Derartige Anwendungen sind mit dem Stand der Technik besonders schwer zu realisieren. Die Pufferspeicher werden vorzugsweise als Swing-Pufferspeicher oder als Ringpufferspeicher ausgebildet. Bei einer Ausführungsform zur Datenblockverarbeitung sind die Pufferspeicher entbehrlich.

Bezugszeichenliste

| 1 | digitales Datenverarbeitungssystem |
| 2 | Dateneingang |
| 3 | Datenleitung |
| 4 | digitale Datenquelle |
| 5 | Leitung |
| 6 | Referenzsignaleingang |
| 7 | Leitung |
| 8 | Eingang |
| 9 | Eingangspufferspeicher |
| 10 | Ausgang |
| 11 | Leitung |
| 12 | Multiplexereingang |
| 13 | Multiplexer. |
| 14 | Multiplexerausgang |
| 15 | Leitung |
| 16 | Dateneingang |
| 17 | Datenverarbeitungseinheit |
| 18 | Steuereingang |
| 19 | Steuerleitung |

20 Steuereinheit
21 Steuerleitung
22 Steuereingang
23 Steuerleitung
24 Steuereingang
25 Demultiplexer
26 Demultiplexereingang
27 Leitung
28 Datenausgang
29 Demultiplexerausgang
30 Leitung
31 Datenausgang
32 Datensenke
33 Datenleitung
34 Referenzsignalleitung
35 Eingang
36 Taktsignal-Erzeugungsschaltung
37 Ausgang
38 Leitung
39 Eingang
40 Frequenz-Vervielfachungsschaltung
41 Ausgang
42 Leitung
43 Takteingang
44 Leitung
45 Schalteinrichtung
46 Steuerleitung
47 Ausgangsdatenpuffer
48 Leitung

## Patentansprüche

1. Digitales Echtzeit-Datenverarbeitungssystem, das digitale Eingangsdatenströme, die von mehreren digitalen Datenquellen (4) empfangen werden, zu digitalen Ausgangsdatenströmen verarbeitet und an digitale Datensenken (32) abgibt, wobei das digitale Datenverarbeitungssystem (1) aufweist:

   (a) mindestens einen steuerbaren Multiplexer (13) mit mehreren Eingängen (12), an denen jeweils ein empfangener digitaler Eingangsdatenstrom anliegt;
   (b) mindestens eine getaktete Datenverarbeitungseinheit (17) zur Datenverarbeitung des von einem Ausgang (14) des Multiplexers abgegebenen digitalen Eingangsdatenstromes,
   wobei die Datenverabeitungseinheit (17) mit einem Taktsignal getaktet wird, dessen Taktfrequenz dem Produkt aus der maximalen Datenübertragungsrate ($R_{max}$) aller Eingangs- und Ausgangsdatenströme und der Anzahl (N) der Datenquellen und Datensenken entspricht;
   (c) mindestens einen steuerbaren Demultiplexer (25), über dessen Ausgänge (29) die verarbeiteten Daten als die digitale Ausgangsdatenströme an die digitalen Datensenken (32) abgegeben werden;
   (d) eine Steuereinheit (20) zur Ansteuerung des Multiplexers (13), des Demultiplexers (25) und der digitalen Datenverarbeitungseinheit (17),

   wobei die Steuereinheit (20) die Eingänge (12) des Multiplexers zyklisch jeweils für einen konstanten Zeitbruchteil ($T_i$) der Zykluszeit ($T_{Zyklus}$) an einen Dateneingang (16) der Datenverarbeitungseinheit (17) durchschaltet,
   wobei die Steuereinheit die Ausgänge (29) des Demultiplexers (25) zyklisch jeweils für den konstanten Zeitbruchteil ($T_i$) an die zugehörige digitale Datensenke (32) schaltet,
   wobei die Steuereinheit (20) die Datenverarbeitungseinheit (17) zur Datenverarbeitung der von dem Multiplexer (13) durchgeschalteten Daten eines mit einer bestimmten Datenübertragungsrate empfangenen digitalen Eingangsdatenstromes jeweils für eine variable Datenverarbeitungszeit ($T_{aktiv}$) akti-viert.

2. Digitales Echtzeit-Datenverarbeitungssystem nach Anspruch 1,

**dadurch gekennzeichnet,**

**daß** mehrere Eingangspufferspeicher (9) vorgesehen sind, die jeweils die Daten eines empfangenen digitalen Eingangsdatenstromes zwischenspeichern.

3. Digitales Echtzeit-Datenverarbeitungssystem nach Anspruch 1 oder 2,
**dadurch gekennzeichnet,**
**daß** die Steuereinheit (20) die Datenverarbeitungszeit derart berechnet, daß das Verhältnis zwischen der Datenverarbeitungszeit und dem maximal zur Verfügung stehenden konstanten Zeitbruchteil der Zykluszeit gleich dem Verhältnis zwischen der Datenübertragungsrate ($R_i$) des zu verarbeitenden digitalen Eingangsdatenstromes und der maximalen Datenübertragungsrate ($R_{max}$) von allen Eingangs- und Ausgangsdatenströmen ist.

4. Digitales Echtzeit-Datenverarbeitungssystem nach einem der vorangehenden Ansprüche,
**dadurch gekennzeichnet,**
**daß** die Steuereinheit (20) die Datenverarbeitungseinheit (17) zur Datenverarbeitung der von dem Multiplexer durchgeschalteten Daten eines digitalen Eingangsdatenstromes für eine erste Anzahl (r) von Zyklen aktiviert und für eine zweite Anzahl (s) von Zyklen deaktiviert, wobei das Verhältnis zwischen der Anzahl (s) der deaktivierten Zyklen und der Anzahl (r) der aktivierten Zyklen von dem Verhältnis zwischen der maximalen Datenübertragungsrate ($r_{max}$) und der Datenübertragungsrate ($R_i$) des digitalen Eingangsdatenstromes abhängt.

5. Digitales Echtzeit-Datenverarbeitungssystem nach einem der vorangehenden Ansprüche,
**dadurch gekennzeichnet,**
**daß** die Steuereinheit (20) die digitale Datenverarbeitungseinheit (17) nach Ablauf der Datenverarbeitungszeit deaktiviert.

6. Digitales Echtzeit-Datenverarbeitungssystem nach einem der vorangehenden Ansprüche,
**dadurch gekennzeichnet,**
**daß** die von den Ausgängen (29) des Demultiplexers abgegebenen verarbeiteten Daten in Ausgangspufferspeichern (47) zwischengespeichert werden.

7. Digitales Echtzeit-Datenverarbeitungssystem nach einem der vorangehenden Ansprüche,
**dadurch gekennzeichnet,**
**daß** die Steuereinheit (20) die digitale Datenverarbeitungseinheit (17) zur Datenverarbeitung der Daten eines digitalen Eingangsdatenstromes deaktiviert, wenn ein erfaßter Datenfüllstand des zugehörigen Ausgangspufferspeichers (47) einen einstellbaren Schwellenwert überschreitet.

8. Digitales Echtzeit-Datenverarbeitungssystem nach einem der vorangehenden Ansprüche,
**dadurch gekennzeichnet,**
**daß** die Steuereinheit (20) zur Deaktivierung der Datenverarbeitungseinheit (17) eine Schalteinrichtung (45) zur Unterbrechung des Taktsignals, durch welches die digitale Datenverarbeitungseinheit (17) getaktet wird, ansteuert.

9. Digitales Echtzeit-Datenverarbeitungssystem nach einem der vorangehenden Ansprüche,
**dadurch gekennzeichnet,**
**daß** die digitalen Eingangsdatenströme von Analog-/Digitalwandlern abgegeben werden.

10. Digitales Echtzeit-Datenverarbeitungssystem nach einem der vorangehenden Ansprüche,
**dadurch gekennzeichnet,**
**daß** die Pufferspeicher Swinging-Puffer oder Ringpuffer sind.

11. Digitales Echtzeit-Datenverarbeitungssystem nach einem der vorangehenden Ansprüche,
**dadurch gekennzeichnet,**
**daß** die Anzahl der digitalen Datenquellen (4) gleich der Anzahl der digitalen Datensenken (47) ist.

12. Digitales Echtzeit-Datenverarbeitungssystem nach einem der vorangehenden Ansprüche,
**dadurch gekennzeichnet,**
**daß** die Datenübertragungsraten der Eingangs- und der Ausgangsdatenströme unterschiedlich sind.

13. Digitales Echtzeit-Datenverarbeitungssystem nach einem der vorangehenden Ansprüche,
**dadurch gekennzeichnet,**

**daß** eine Taktsignal-Erzeugungsschaltung (36) die Datenübertragungsraten aller digitalen Eingangsdatenströme und aller digitalen Ausgangsdatenströme erfaßt und ein Taktsignal generiert, dessen Taktfrequenz der maximalen erfaßten Datenübertragungsrate ($R_{max}$) entspricht.

14. Digitales Echtzeit-Datenverarbeitungssystem nach einem der vorangehenden Ansprüche,
   **dadurch gekennzeichnet,**
   **daß** eine Frequenz-Vervielfachungsschaltung vorgesehen ist, welche die Taktfrequenz des von der Taktsignal-Erzeugungsschaltung (36) abgegebenen Taktsignals um einen konstanten Faktor zur Erzeugung des Taktsignals für die Datenverarbeitungseinheit (17) multipliziert.

15. Digitales Echtzeit-Datenverarbeitungssystem nach Anspruch 14,
   **dadurch gekennzeichnet,**
   **daß** der Faktor der Anzahl der digitalen Datenquellen (4) und der Anzahl der digitalen Datensenken (47) entspricht.

16. Verfahren zur digitalen Echtzeit-Datenverarbeitung von Daten, die von einer Anzahl von digitalen Datenquellen (4) abgegeben werden, mit den folgenden Schritten:

   (a) Empfangen von mehreren digitalen Eingangsdatenströmen mit unterschiedlichen Datenübertragungsraten von verschiedenen digitalen Datenquellen (4);
   (b) zyklisches Verarbeiten aller empfangenen digitalen Eingangsdatenströme durch eine digitale Datenverarbeitungseinheit (17),
   wobei die Datenverarbeitungseinheit (17) mit einem Taktsignal getaktet wird, dessen Taktfrequenz dem Produkt der maximalen Datenübertragungsrate ($R_{max}$) aller Eingangs- und Ausgangsdatenströme und der Anzahl (N) der digitalen Datenquellen und der digitalen Datensenken entspricht, und
   wobei die jeweilige Datenverarbeitungszeit zum Verarbeiten eines digitalen Eingangsdatenstromes variabel eingestellt wird;
   (c) Ausgeben der verarbeiteten digitalen Eingangsdatenströme als digitale Ausgangsdatenströme an digitale Datensenken (32) .

**Claims**

1. Digital real-time data processing system which processes digital input data streams received from a plurality of digital data sources (4) to produce digital output data streams and sends them to digital data sinks (32), the digital data processing system (1) having:

   (a) at least one controllable multiplexer (13) having a plurality of inputs (12) to which a respective received digital input data stream is applied;
   (b) at least one clocked data processing unit (17) for data processing the digital input data stream sent from an output (14) on the multiplexer,
   the data processing unit (17) being clocked with a clock signal whose clock frequency corresponds to the product of the maximum data transmission rate ($R_{max}$) of all the input and output data streams and the number (N) of data sources and data sinks;
   (c) at least one controllable demultiplexer (25) via whose outputs (29) the processed data are sent to the digital data sinks (32) as the digital output data streams;
   (d) a control unit (20) for actuating the multiplexer (13), the demultiplexer (25) and the digital data processing unit (17),

   where the control unit (20) connects the inputs (12) of the multiplexer to a data input (16) on the data processing unit (17) cyclically for a respective constant time fraction ($T_i$) of the cycle time ($T_{cycle}$),
   where the control unit connects the outputs (29) of the demultiplexer (25) to the associated digital data sink (32) cyclically for the respective constant time fraction ($T_i$),
   where the control unit (20) activates the data processing unit (17) for data processing the data, connected by the multiplexer (13), in a digital input data stream received at a particular data transmission rate for a respective variable data processing time ($T_{active}$).

2. Digital real-time data processing system according to Claim 1,
   **characterized**

**in that** a plurality of input buffer stores (9) are provided which each buffer the data in a received digital input data stream.

3. Digital real-time data processing system according to Claim 1 or 2, **characterized**
   **in that** the control unit (20) calculates the data processing time such that the ratio between the data processing time and the maximum constant time fraction of the cycle time available is equal to the ratio between the data transmission rate ($R_i$) of the digital input data stream to be processed and the maximum data transmission rate ($R_{max}$) of all the input and output data streams.

4. Digital real-time data processing system according to one of the preceding claims, **characterized**
   **in that** the control unit (20) activates the data processing unit (17) for data processing the data, connected by the multiplexer, in a digital input data stream for a first number (r) of cycles and deactivates for a second number (s) of cycles, the ratio between the number (s) of deactivated cycles and the number (r) of activated cycles being dependent on the ratio between the maximum data transmission rate ($r_{max}$) and the data transmission rate ($R_i$) of the digital input data stream.

5. Digital real-time data processing system according to one of the preceding claims, **characterized**
   **in that** the control unit (20) deactivates the digital data processing unit (17) after the data processing time has elapsed.

6. Digital real-time data processing system according to one of the preceding claims, **characterized**
   **in that** the processed data sent from the outputs (29) on the demultiplexer are buffered in output buffer stores (47).

7. Digital real-time data processing system according to one of the preceding claims, **characterized**
   **in that** the control unit (20) deactivates the digital data processing unit (17) for data processing the data in a digital input data stream if a detected data filling level in the associated output buffer store (47) exceeds a settable threshold value.

8. Digital real-time data processing system as claimed in one of the preceding claims, **characterized**
   **in that** the control unit (20) deactivates the data processing unit (17) by actuating a switching device (45) for interrupting the clock signal which clocks the digital data processing unit (17).

9. Digital real-time data processing system according to one of the preceding claims, **characterized**
   **in that** the digital input data streams are sent by analogue/digital converters.

10. Digital real-time data processing system according to one of the preceding claims, **characterized**
    **in that** the buffer stores are swinging buffers or ring buffers.

11. Digital real-time data processing system according to one of the preceding claims, **characterized**
    **in that** the number of digital data sources (4) is equal to the number of digital data sinks (32).

12. Digital real-time data processing system according to one of the preceding claims, **characterized**
    **in that** the data transmission rates of the input and output data streams are different.

13. Digital real-time data processing system according to one of the preceding claims, **characterized**
    **in that** a clock-signal generation circuit (36) detects the data transmission rates of all the digital input data streams and of all the digital output data streams and generates a clock signal whose clock frequency corresponds to the maximum detected data transmission rate ($R_{max}$).

**14.** Digital real-time data processing system according to one of the preceding claims,
**characterized**
**in that** a frequency multiplication circuit is provided which multiplies the clock frequency of the clock signal sent by the clock-signal generation circuit (36) by a constant factor in order to generate the clock signal for the data processing unit (17).

**15.** Digital real-time data processing system according to Claim 14,
**characterized**
**in that** the factor corresponds to the number of digital data sources (4) and to the number of digital data sinks (32).

**16.** Method for digital real-time data processing of data which are sent by a number of digital data sources (4), having the following steps:

(a) a plurality of digital input data streams having different data transmission rates are received from various digital data sources (4);
(b) all the received digital input data streams are cyclically processed by a digital data processing unit (17), the data processing unit (17) being clocked with a clock signal whose clock frequency corresponds to the product of the maximum data transmission rate ($R_{max}$) of all the input and output data streams and the number (N) of digital data sources and digital data sinks, and the respective data processing time for processing a digital input data stream being variably adjusted;
(c) the processed digital input data streams are output to digital data sinks (32) as digital output data streams.

## Revendications

**1.** Système de traitement de données numérique temps réel qui convertit des flux de données d'entrée numériques, reçus de plusieurs sources de données (4) numériques, en flux de données de sortie numériques et les délivre à des collecteurs de données (32), le système de traitement de données numérique (1) comprenant :

a) au moins un multiplexeur (13), pouvant être commandé, avec plusieurs entrées (12) auxquelles on applique, à chaque fois, un flux de données d'entrée numérique reçu ;
b) au moins une unité cadencée de traitement de données (17) pour le traitement de données du flux de données d'entrée numérique délivré par une sortie (14) du multiplexeur,
l'unité de traitement de données (17) étant cadencée avec un signal d'horloge dont la fréquence d'horloge correspond au produit du débit de transmission de données maximal ($R_{max}$) de tous les flux de données en entrée et en sortie et du nombre (N) de sources de données et de collecteurs de données ;
c) au moins un démultiplexeur (25), pouvant être commandé, les données traitées étant délivrées via ses sorties (29) sous forme de flux de données de sortie numériques aux collecteurs de données (32) numériques ;
d) une unité de commande (20) pour la commande du multiplexeur (13), du démultiplexeur (25) et de l'unité de traitement de données (17),

l'unité de commande (20) connectant les entrées (12) du multiplexeur à une entrée de données (16) de l'unité de traitement de données (17) de façon cyclique et à chaque fois pour une fraction de temps constante ($T_i$) du temps de cycle ($T_{cycle}$),
l'unité de commande connectant les sorties (29) du démultiplexeur (25) au collecteur de données (32) numérique correspondant de façon cyclique et à chaque fois pour une fraction de temps constante ($T_i$),
l'unité de commande (20) activant l'unité de traitement de données (17) pour le traitement des données, transmises par le multiplexeur (13), d'un flux de données d'entrée numérique reçu avec un débit de transmission de données déterminé, à chaque fois pour un temps de traitement de données variable ($T_{actif}$).

**2.** Système de traitement de données numérique temps réel selon la revendication 1,
**caractérisé en ce que**
plusieurs mémoires tampons d'entrée (9) sont prévues pour mémoriser temporairement, à chaque fois, les données d'un flux de données d'entrée numérique reçu.

**3.** Système de traitement de données numérique temps réel selon la revendication 1 ou 2,
**caractérisé en ce que**
l'unité de commande (20) calcule le temps de traitement de données de telle façon que le rapport entre le temps de traitement de données et la fraction de temps, du temps de cycle, constante et disponible au maximum est égal au rapport entre le débit de transmission de données ($R_i$) du flux de données d'entrée numérique à traiter et le débit de transmission de données maximal ($R_{max}$) de tous les flux de données d'entrée et de sortie.

**4.** Système de traitement de données numérique temps réel selon l'une quelconque des revendications précédentes, **caractérisé en ce que**
l'unité de commande (20) active l'unité de traitement de données (17) pour le traitement des données, transmises par le multiplexeur, d'un flux de données d'entrée numérique pour un premier nombre (r) de cycles et la désactive pour un deuxième nombre (s) de cycles, le rapport entre le nombre (s) de cycles désactivés et le nombre (r) de cycles activés étant dépendant du rapport entre le débit de transmission de données maximal ($r_{max}$) et le débit de transmission de données ($R_i$) du flux de données d'entrée numérique.

**5.** Système de traitement de données numérique temps réel selon l'une quelconque des revendications précédentes, **caractérisé en ce que**
l'unité de commande (20) désactive l'unité de traitement de données numérique (17) à la fin du temps de traitement de données.

**6.** Système de traitement de données numérique temps réel selon l'une quelconque des revendications précédentes, **caractérisé en ce que**
les données traitées délivrées par les sorties (29) du démultiplexeur sont mémorisées temporairement dans des mémoires tampons de sortie (47).

**7.** Système de traitement de données numérique temps réel selon l'une quelconque des revendications précédentes, **caractérisé en ce que**
l'unité de commande (20) désactive l'unité de traitement de données (17) numérique pour le traitement des données d'un flux de données d'entrée numérique, lorsqu'un niveau de chargement en données saisies de la mémoire tampon de sortie (47) correspondante dépasse une valeur seuil réglable.

**8.** Système de traitement de données numérique temps réel selon l'une quelconque des revendications précédentes, **caractérisé en ce que**
l'unité de commande (20) actionne pour la désactivation de l'unité de traitement des données (17) un dispositif de commutation (45) pour interrompre le signal d'horloge avec lequel l'unité de traitement de données (17) est cadencée.

**9.** Système de traitement de données numérique temps réel selon l'une quelconque des revendications précédentes, **caractérisé en ce que**
les flux de données numériques sont délivrés par des convertisseurs analogique-numérique.

**10.** Système de traitement de données numérique temps réel selon l'une quelconque des revendications précédentes, **caractérisé en ce que**
les mémoires tampons sont des tampons oscillation ou des tampons anneau.

**11.** Système de traitement de données numérique temps réel selon l'une quelconque des revendications précédentes, **caractérisé en ce que**
le nombre de sources de données (4) numériques est égal au nombre de collecteurs de données (32) numériques.

**12.** Système de traitement de données numérique temps réel selon l'une quelconque des revendications précédentes, **caractérisé en ce que**
les débits de transmission de données des flux de données d'entrée et de sortie sont différents.

**13.** Système de traitement de données numérique temps réel selon l'une quelconque des revendications précédentes, **caractérisé en ce que**
un circuit de génération de signal d'horloge (36) détecte les débits de transmission de données de tous les flux de données d'entrée numériques et de tous les flux de données de sortie numériques et génère un signal d'horloge dont la fréquence correspond au débit de transmission de données maximal détecté ($R_{max}$).

**14.** Système de traitement de données numérique temps réel selon l'une quelconque des revendications précédentes, **caractérisé en ce que**
un circuit de multiplication de fréquence est prévu, il multiplie la fréquence d'horloge du signal d'horloge délivré par le circuit de génération de signal d'horloge (36) avec un facteur constant pour la génération d'un signal d'horloge pour l'unité de traitement de données (17).

15. Système de traitement de données numérique temps réel selon la revendication 14,
**caractérisé en ce que**
le facteur correspond au nombre de sources de données (4) numériques et au nombre de collecteurs de données (32 ) numériques.

16. Procédé de traitement de données numérique temps réel pour des données, délivrées par un certain nombre de sources de données (4) numériques, avec les étapes suivantes :

a) réception de plusieurs flux de données d'entrée numériques avec différents débits de transmission de données de différentes sources de données (4);
b) traitement cyclique de tous les flux de données d'entrée reçus par l'unité de traitement de données (17), l'unité de traitement de données (17) étant cadencée avec un signal d'horloge dont la fréquence correspond au produit du débit de transmission de données maximal ($R_{max}$) de tous les flux de données d'entrée et de sortie et du nombre (N) de sources de données numériques et de collecteurs de données numériques, et le temps correspondant de traitement de données pour le traitement d'un flux de données d'entrée numérique étant ajusté de façon variable ;
c) délivrance des flux de données d'entrée numériques traités sous forme de flux de données de sortie numériques aux collecteurs de données (32) numériques.

Fig. 1

Stand der Technik 1

EP 1 364 299 B1

Fig. 2

Stand der Technik$_2$

RQ/Ack

RQ/Ack

RQ/Ack

Steuerung

Start/Stop

$DQ_1$

$DQ_2$

$DQ_N$

$P_1$

$P_2$

$P_N$

MUX

Datenverarbeitungseinheit

CLK

Osz.

DEMUX

$DS_1$

$DS_2$

$DS_N$

## Fig. 3

Stand der Technik 3

Fig. 4

EP 1 364 299 B1

Fig. 5

EP 1 364 299 B1

20

Fig. 6

Fig. 7

Tzyklus$_1$ | Tzyklus$_2$ | Tzyklus$_3$ | Tzyklus$_4$

$T_1$ $T_2$ $T_i$ $T_N$ $T_1$ $T_2$ $T_i$ $T_N$ $T_1$ $T_2$ $T_i$ $T_N$ $T_i$

r r s r

t

Fig. 8

Fig. 9

Fig. 10